# EUROPÄISCHE PATENTANMELDUNG

(11) **EP 4 361 866 A1**
(43) Veröffentlichungstag der Anmeldung: **01.05.2024**
(21) Anmeldenummer: 22204478.6
(22) Anmeldetag: 28.10.2022
(51) Int. Cl.: G06F 21/62, G06F 21/56, H04L 9/40, G06F 21/53

(54) **VERFAHREN UND SYSTEM ZUR UMGEBUNGS-ABHÄNGIGEN SICHERHEITSBEZOGENEN ANOMALIEERKENNUNG FÜR EINE CONTAINERINSTANZ**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

System und Verfahren zur Umgebungs-abhängigen sicherheitsbezogenen Anomalieerkennung für eine Containerinstanz (23), die auf einer Container-Laufzeitumgebung (22) in einem Gastrechner (20) ausgeführt wird, umfassend die Schritte:
ausgeführt von einer Anomalieerkennungskomponente (24) im Gastrechner (20),
- Empfangen (S1) eines statischen Regelwerks umfassend mindestens eine Anomalieerkennungsregel mit mindestens einer zugeordneten Bedingung, wobei die Bedingung mindestens eine in einer Überwachungskomponente (30, 31) implementierte Sicherheitsmaßnahme oder eine dort detektierte Sicherheitsschwachstelle angibt,
- beim Start der Containerinstanz (23) auf der Container-Laufzeitumgebung (22), Ermitteln (S2) von implementierten Sicherheitsmaßnahmen oder detektierten Sicherheitsschwachstellen, die für die Containerinstanz (23) von mindestens eine der Überwachungskomponenten (30, 31) bereitgestellt werden,
- Erzeugen (S3) eines dynamischen, Containerinstanzspezifischen Regelwerks, indem diejenigen Anomalieerkennungsregeln des statischen Regelwerks, deren Bedingungen durch die ermittelten Sicherheitsmaßnahmen und/oder ermittelten Sicherheitsschwachstellen erfüllt sind, aktiviert werden, und
- Starten (S4) der Sicherheitsmaßnahmen entsprechend dem dynamischen Regelwerk für die Containerinstanz (23).

## Beschreibung

Die Erfindung betrifft ein Verfahren, ein System und ein Computer-Programmprodukt zur Umgebungs-abhängigen sicherheitsbezogenen Anomalieerkennung für eine Containerinstanz, die auf einer Container-Laufzeitumgebung in einem Gastrechner ausgeführt wird.

Container-Virtualisierung ist eine Virtualisierungsmethode auf Betriebssystemebene. Dabei wird Computerprogrammen eine komplette Laufzeitumgebung virtuell innerhalb eines isolierten bzw. abgeschlossenen Software-Containers zur Verfügung gestellt. Die Laufzeitumgebung kann von einer Vielzahl von Containern genutzt werden und greift auf einen Betriebssystemkern eines Gastrechners zu. Der Betriebssystemkern kann den Zugriff auf Ressourcen in Abhängigkeit davon einschränken, unter welchem Benutzer und Kontext ein Prozess läuft. Software-Container, im Weiteren kurz Container genannt, stellen somit gegenüber virtuellen Maschinen, die über ein eigenes Betriebssystem verfügen und mit Hilfe eines Hypervisors Hardwareressourcen des darunterliegenden Systems zugewiesen bekommen und über einen eigenen Betriebssystemkern verfügen, eine ressourcenschonende Art der Virtualisierung dar und kapseln eine in einem Container betriebene Software-Anwendung vom darunterliegenden Gastrechner ab.

Software-Anwendungen werden mittlerweile in vielen Bereichen durch den Einsatz von Container-Technologie implementiert, beispielsweise in der Industrieautomation und der Prozesssteuerung, aber auch in Transportsystemen oder der Gebäudeautomatisierung.

Um einen Container auf dem Gastrechner starten zu können, wird ein Containerimage benötigt, welches neben der Anwendungssoftware auch die für die Anwendungssoftware erforderlichen Binärprogramme und Bibliotheken enthält. Aus dem Containerimage wird mit Hilfe einer Deployment-Information auf dem Gastrechner ein Container, genauer eine Containerinstanz, erstellt und auf der Laufzeitumgebung des Gastrechners ausgeführt.

Eine orchestrierte Laufzeitumgebung umfasst einen Orchestrierer und mindestens einen Gastrechner, meist eine Vielzahl von Gastrechnern, auch als Knoten bezeichnet, die dem Orchestrierer zugeordnet sind. Der Orchestrierer startet, verwaltet und beendet Containerinstanzen auf den zugeordneten Gastrechnern. Typische orchestrierte Laufzeitumgebungen sind hierbei Kubernetes-basierte Containerumgebungen, die beispielsweise Cloudbasierte Container-as-a-Services-Umgebungen oder in einer Cloud betriebene virtuelle Instanzen als Knoten einer orchestrierten Laufzeitumgebung verwalten.

Es ist bekannt Containerinstanzen durch Anomalieerkennung gegen unberechtigte Zugriffe zu schützen, insbesondere wenn kritische Privilegien, die der Containerinstanz eingeräumt wurden, aufgrund von applikationsseitigen Privilegien nicht vollumfänglich eingeschränkt werden können oder die Containerinstanzen nicht durch den Einsatz von Sicherheitsmaßnahmen wie Netzwerkbeschränkungen (mit Hilfe von Netwerk policies), Ausführungsbeschränkungen (z.B. mit Hilfe von Seccomp-Profilen oder Linux Capabilities) oder durch Security Suites wie beispielsweise AquaSec überwacht und eingeschränkt werden. Für die Anomalieerkennung von Containern ist eine Lösung namens Falco (www.falco.org) bekannt, welche auf Basis von System Calls Anomalierkennung für Containerinstanzen durchführt. Einzelne, die Instanz betreffende Kubernetes-Einstellungen, wie der zugehörige Namespace werden gemäß der Dokumentation (siehe https://falco.org/docs/rules/supportedfields/) beim jeweiligen System-Call abgefragt. Hierdurch kann jedoch keine aktive Benachrichtigung durch den Orchestrator während einer Ausführung relevanter Orchestratoroperationen durchgeführt werden.

Sind auf einer Laufzeitumgebung für die Anomalieerkennung umfangreiche Integritätsüberwachungsregeln definiert und werden auf dieser Laufzeitumgebung viele Containerinstanzen betrieben, entsteht das Problem, dass sämtliche Containerinstanzen gegenüber den Integritätsüberwachungsregeln geprüft werden müssen und somit Ressourcen des darunterliegenden Systems in signifikanter Weise belegt werden. Gleiches gilt für das Monitoring spezieller Integritätsüberwachungen wie die Überwachung intensiver Schreibzugriffe einzelner Containerinstanzen, das ebenfalls Ressourcen in signifikanter Weise belegt. Dadurch sind deutliche Performanceeinbußen für die jeweiligen Containerinstanzen möglich.

Daher besteht generell das grundlegende Bedürfnis, den Umfang der auf die Containerinstanzen anzuwendenden Regeln zu minimieren und somit die Performanceeinbußen gering zu halten. Da dem Ersteller der Integritätsregeln die außerhalb der Anomalieerkennungslösung implementierten Sicherheitslösungen jedoch nicht immer bekannt sind oder sich auch in unterschiedlichen Umgebungen (z.B. Test-, Integrations- und Produktionsumgebung) unterscheiden können, sind nicht in jeder Umgebung die gleichen Integritätsregeln für die Anomalieerkennung erforderlich.

Es ist somit die Aufgabe der vorliegenden Erfindung, ein Verfahren zu schaffen, welches eine flexible, Ressourcensparende Anomalieerkennung für unterschiedliche Containerinstanzen ermöglicht.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Umgebungs-abhängigen sicherheitsbezogenen Anomalieerkennung für eine Containerinstanz, die auf einer Container-Laufzeitumgebung in einem Gastrechner ausgeführt wird, umfassend folgende in einer Anomalieerkennungskomponente im Gastrechner ausgeführten Schritte:
- Empfangen eines statischen Regelwerks umfassend mindestens eine Anomalieerkennungsregel mit mindestens einer zugeordneten Bedingung, wobei die Bedingung mindestens eine in einer Überwachungskomponente implementierte Sicherheitsmaßnahme oder eine dort detektierte Sicherheitsschwachstelle angibt,
- beim Start der Containerinstanz auf der Container-Laufzeitumgebung, Ermitteln von implementierten Sicherheitsmaßnahmen oder detektierten Sicherheitsschwachstellen, die für die Containerinstanz von mindestens eine der Überwachungskomponenten bereitgestellt werden,
- Erzeugen eines dynamischen, Containerinstanz-spezifischen Regelwerks, indem diejenigen Anomalieerkennungsregeln des statischen Regelwerks, deren Bedingungen durch die ermittelten Sicherheitsmaßnahmen und/oder Sicherheitsschwachstellen erfüllt sind, aktiviert werden, und
- Starten der Sicherheitsmaßnahmen entsprechend dem dynamischen Regelwerk für die Containerinstanz.

Die im statischen Regelwerk einer Anomalieerkennungsregel zugeordneten Bedingungen geben an, in welcher Abhängigkeit zu einer in der Überwachungskomponente implementierten Sicherheitsmaßnahme, die mindestens eine Anomalieerkennungsregel des Regelwerks aktiviert wird. Das statische und auch das dynamische, Containerinstanz-spezifischen Regelwerk kann zusätzliche Anomalieerkennungsregeln enthalten, denen keine Bedingungen zugeordnet sind und somit immer aktiv sind. Somit ist das dynamische, Container-spezifische Integritätsregelwerk auf die für die Containerinstanz passenden Sicherheitsmaßnahmen optimiert. Durch Abfrage bereits vorhandener und aktiver Sicherheitsmaßnahmen in den Überwachungskomponenten, können gleiche oder ähnliche Sicherheitsmaßnahmen aus dem Integritätsregelwerk entfernt werden, sodass weniger Ressourcen auf dem Gastrechner zur Ausführung der Sicherheitsmaßnahmen des dynamischen Regelwerks belegt werden. Der Gastrechner kann als ein einzelner Computer oder als eine Virtuelle Maschine bspw. in einer Cloud ausgebildet sein.

In einer vorteilhaften Ausführungsform werden die Sicherheitsmaßnahmen, die für die Containerinstanz durch mindestens eine Überwachungskomponente bereitgestellt werden, anhand eines eindeutigen Parameters der Containerinstanz, insbesondere einem Containerinstanznamen, mittels einer Anfrage bei der Container-Laufzeitumgebung und/oder einer Orchestratorschnittstelle von die Anomalieerkennungskomponente ermittelt.

Somit können feingranular für jede Containerinstanz und flexibel abhängig von dem gewählten eindeutigen Parameter der Containerinstanzen die bereits vorgesehenen Sicherheitsmaßnahmen und/oder Einstellungen in der mindestens einen Überwachungskomponente ermittelt werden. Somit kann das dynamische Regelwerk auf unterschiedliche Sicherheitsbedürfnisse oder Angriffsmöglichkeiten eingestellt werden.

In einer vorteilhaften Ausführungsform umfasst mindestens eine der Bedingungen eine Kombination von Sicherheitsmaßnahmen und/oder Schwachstellen, die durch mehrere unterschiedliche Überwachungskomponenten durchgeführt werden bzw. detektiert sind.

Somit können unterschiedliche Anforderungen einer von der Containerinstanz ausgeführten Anwendung und der von der Anwendung benötigten unterschiedlichen Privilegien berücksichtigt werden und die dynamische Sicherheitsregel sehr flexibel konfiguriert werden.

In einer vorteilhaften Ausführungsform übermittelt die mindestens eine Überwachungskomponente eine Rückmeldung eines Ergebnisses der mindestens einen durchgeführten Sicherheitsmaßnahme bzw. der detektierten Sicherheitsschwachstelle an die Anomalieerkennungskomponente.

Dadurch kann die Anomalieerkennungskomponente schnell und ohne Zeitverzögerung auf jede der einzelnen Rückmeldungen reagieren, beispielsweise eine Alarmmeldung generieren und ausgeben.

In einer vorteilhaften Ausführungsform empfängt eine zentrale Sicherheitsmanagementeinrichtung die mindestens eine Rückmeldung von der mindestens einen Überwachungskomponente, die die Rückmeldungen der mindestens einen Überwachungskomponente korreliert und mindestens eine korrelierte Rückmeldung an die Anomalieerkennungskomponente übermittelt.

Die Sicherheitsmanagementeinrichtung kann somit Abhängigkeiten zwischen mehreren Rückmeldungen von unterschiedlichen Überwachungskomponenten ermitteln und mit bekannten Mustern vergleichen beispielsweise über ein trainiertes maschinelles Lernverfahren ermitteln, und somit eine Vorauswertung der Rückmeldungen durchführen. In der Rückmeldung wird das Ergebnis der Vorauswertung an die Anomalieerkennungskomponente weitergegeben. Dadurch wird Prozessierungskapazität in der Anomalieerkennungseinrichtung sowie Übertragungskapazität zwischen den einzelnen Überwachungskomponenten und der Anomalieerkennungseinrichtung eingespart.

In einer vorteilhaften Ausführungsform wird eine Kommunikationsverbindung, über die Rückmeldungen übermittelt werden, integritäts- und authentizitätsgesichert, insbesondere durch ein TLS Protokoll, eingerichtet.

Dies minimiert eine Manipulation der Rückmeldung auf dem Übertragungsweg zwischen Überwachungskomponente und/oder Sicherheitsmanagementeinheit und Anomalieerkennungseinrichtung und eine Einspeisung von Rückmeldungen durch einen unerlaubten Dritten.

In einer vorteilhaften Ausführungsform werden aus einer Vielzahl von Rückmeldungen für jede Überwachungskomponente eine Untermenge von Rückmeldungen ausgewählt und lediglich die ausgewählten Rückmeldungen werden von den Überwachungskomponenten an die Anomalieerkennungskomponente bereitgestellt.

So können die Rückmeldungen der Überwachungskomponente weiter eingeschränkt und auf die für die Sicherheit der betrachteten Instanz angepasst werden. Dies reduziert die benötigte Übertragungsbandbreite für die Rückmeldungen und den Bearbeitungsaufwand in der Anomalieerkennungseinheit und/oder der Sicherheitsmanagementeinrichtung.

In einer vorteilhaften Ausführungsform wird eine Konfigurationsänderung, die während der Laufzeit der Containerinstanz in einer der Überwachungskomponenten durchgeführt wird, an die Anomalieerkennungskomponente gemeldet.

Somit kann die Anomalieerkennungskomponente zeitnah auf die Konfigurationsänderung reagieren und beispielsweise eine Alarmierung ausgeben oder eine Notmaßnahme einleiten.

In einer vorteilhaften Ausführungsform wird das dynamische Containerinstanz-spezifische Regelwerk in der Anomalieerkennungskomponente an die geänderte Konfiguration der Überwachungskomponente angepasst.

Somit kann das Containerinstanz-spezifische Regelwerk dynamisch während der Laufzeit der Containerinstanz an die verfügbaren Sicherheitsmaßnahmen in den Überwachungskomponenten angepasst werden.

In einer vorteilhaften Ausführungsform wird beim Beenden der Containerinstanz eine Ereignismeldung an die Anomalieerkennungskomponente übermittelt und das dynamische, Containerinstanz-spezifische Regelwerk wird auf der Anomalieerkennungskomponente gelöscht.

Dadurch wird sichergestellt, dass stets auf dem Gastrechner ein Containerinstanz-spezifisches Regelwerk für die darauf betriebenen Containerinstanzen generiert wird. Somit können Änderungen, die in einer neu zu startenden Containerinstanz gegenüber einer früheren Containerinstanz vorliegen, auch in der Konfiguration des neuen Containerinstanz-spezifischen Regelwerks berücksichtigt werden.

In einer vorteilhaften Ausführungsform ist eine der Überwachungskomponenten eine der folgenden Komponenten:
- eine Orchestrierungseinheit, die Containerinstanzen auf dem Gastrechner verwaltet,
- eine Security Suite,
- ein zentrales Schwachstellen-Scanning-System (Vulnerability,
- eine Firewalleinrichtung oder eine Intrusion Detection Sysstem (IDS).

Somit können eine Vielzahl von Sicherheitseinrichtungen beim Erstellen des dynamischen Regelwerks einbezogen werden. Eine Security Suite überwacht und beschränkt die ContainerInstanzen bzgl. mehrerer Aspekte beispielsweise bzgl. der Verwendung von Prozessprivilegien oder aufgebauter Netzwerkverbindungen. Die Überwachungskomponente kann nicht nur überwachen, sondern auch aktiv Beschränkungen durchführen. Beispielsweise kann eine als Firewalleinrichtung ausgebildete Überwachungsfunktion abhängig von deren Einstellungen Netzwerkverkehr beschränken bzw. blockieren.

In einer vorteilhaften Ausführungsform ist das statische Regelwerk und/oder das dynamische Regelwerk lokal auf dem Gastrechner oder zentral auf einem abgesetzten Server angeordnet und wird von dort dem Anomalieerkennungskomponente bereitgestellt.

Bei einem lokal auf dem Gastrechner angeordneten Regelwerk kann der Gastrechner autonom ohne zusätzliche Kommunikationsverbindungen nach außen und somit ohne zeitliche Verzögerung das das dynamische Regelwerk erzeugen. Dies ist insbesondere bei Zeitkritischen Anwendungen vorteilhaft. Bei einer Bereitstellung durch einen zentralen, abgesetzten Server kann das statische Regelwerk einfach und für verschiedene Gastrechner aktualisiert werden.

Gemäß einem zweiten Aspekt betrifft die Erfindung ein System zur Umgebungs-abhängigen sicherheitsbezogenen Anomalieerkennung für eine Containerinstanz, die auf einer Container-Laufzeitumgebung in einem Gastrechner ausgeführt wird, umfassend eine Anomalieerkennungskomponente im Gastrechner, die derart ausgebildet ist,
- ein statisches Regelwerk umfassend mindestens eine Anomalieerkennungsregel mit mindestens einer zugeordneten Bedingung zu empfangen, wobei die Bedingung mindestens eine in einer Überwachungskomponente implementierte Sicherheitsmaßnahme oder eine dort detektierte Sicherheitsschwachstelle angibt,
- beim Start der Containerinstanz auf der Container-Laufzeitumgebung, implementierte Sicherheitsmaßnahmen oder detektierte Sicherheitsschwachstellen, die für die Containerinstanz von mindestens eine der Überwachungskomponenten bereitgestellt werden, zu ermitteln,
- ein dynamisches, Containerinstanz-spezifisches Regelwerk zu erzeugen, indem diejenigen Anomalieerkennungsregeln des statischen Regelwerks, deren Bedingungen durch die ermittelten Sicherheitsmaßnahmen und/oder ermittelten Sicherheitsschwachstellen erfüllt sind, aktiviert werden, und
- die Sicherheitsmaßnahmen entsprechend dem dynamischen Regelwerk für die Containerinstanz zu starten.

Das System ist dabei derart ausgebildet, das beschriebene Verfahren auszuführen.

In einer vorteilhaften Ausführungsform umfasst das System eine zentrale Sicherheitsmanagementeinrichtung, die abgesetzt angeordnet von und über eine Kommunikationsverbindung mit dem Gastrechner verbunden ist.

Gemäß einem dritten Aspekt betrifft die Erfindung ein Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens durchzuführen.

Sofern es in der nachfolgenden Beschreibung nicht anders angegeben ist, beziehen sich die Begriffe "starten", "empfangen", "erzeugen", "ermitteln" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse.

Das System und darin optional enthaltene Komponenten, wie beispielsweise das Gerät, die Orchestrierungseinrichtung, die Klassifizierungsdatenbank und dergleichen kann bzw. können einen oder mehrere Prozessoren, umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

Ein Computerprogrammprodukt, wie z. B. ein Computerprogrammmittel, kann beispielsweise als Computerlesbares Speichermedium, in Form einer Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Fig. 1: eine Ausführungsbeispiel des erfindungsgemäßen Systems in Blockdarstellung;
- Fig. 2: ein Ausführungsbeispiel des erfindungsgemäßen Verfahrens als Flußdiagramm;
- Fig. 3: ein Ausführungsbeispiel des erfindungsgemäßen Verfahrens mit einer zentralen Sicherheitsmanagement-einrichtung in Form eines Ablaufdiagramm; und
- Fig. 4: ein Ausführungsbeispiel des erfindungsgemäßen Verfahrens bei einer Aktualisierung des Container-spezifischen Regelwerks als Flußdiagramm.

Einander entsprechende Teile sind in allen Figuren mit den gleichen Bezugszeichen versehen.

Ist auf einer Laufzeitumgebung eines Gastrechners ein umfangreiches Integritätsüberwachungsregelwerk definiert und werden auf dieser Laufzeitumgebung viele unterschiedliche Containerinstanzen betrieben, welche beispielsweise durch unterschiedliche fest vorgegebene Sicherheitsmaßnahmen geschützt werden, entsteht das Problem, dass sämtliche Instanzen entsprechend dem umfangreiche Regelwerk geprüft werden müssen und somit die Integritätsüberwachung in signifikanter Weise Ressourcen des darunterliegenden Systems belegt, wodurch auch deutliche Performance-Einbußen für die jeweiligen Containerinstanzen möglich sind. Containerinstanzen, welche aufgrund applikationsseitiger Privilegien nicht vollumfänglich durch den Entzug kritischer Privilegien oder den Einsatz von Sicherheitsmaßnahmen wie Netzwerkbeschränkungen z.B. mit Hife von Netwerk-Policies oder Security Suites eingeschränkt werden können, können zusätzlich durch sicherheitsbezogene Anomalieerkennung geschützt werden.

Da verschiedene Containerinstanzen zusätzlich mit Hilfe von unterschiedlichen Sicherheitsmaßnahmen wie z.B. Netzwerkpolicies, Sicherheitsfunktionen in Hilfscontainern wie bspw. Sidecars, oder anderen Sicherheitslösungen durch externe Komponenten geschützt werden können, sind nicht in jeder Umgebung die gleichen Integritätsregeln für die Anomalieerkennung einer Containerinstanz erforderlich. Die implementierten Sicherheitsmaßnahmen können sich in unterschiedlichen Umgebungen, beispielsweise in einer Test-, Integrations- und Produktionsumgebung unterscheiden. Einem Ersteller des Integritätsregelwerks sind somit die implementierten Sicherheitsmaßnahmen nicht immer bekannt, sodass sich überlappende oder mehrere auf die gleiche Sicherheitslücke gerichtete Sicherheitsmaßnahmen durchgeführt werden. Beispielsweise kann auf das Monitoring von ein- und ausgehenden Netzwerkverbindungen verzichtet werden, wenn eine Deny by Default Netzwerkpolicy im Einsatz ist, die nicht autorisierte Netzwerkverbindungen unterbindet.

Um den Umfang der auf die Containerinstanzen ausgeführten Sicherheitsmaßnahmen zu optimieren, wird ein nachfolgend beschriebenes System und ein Verfahren vorgeschlagen.

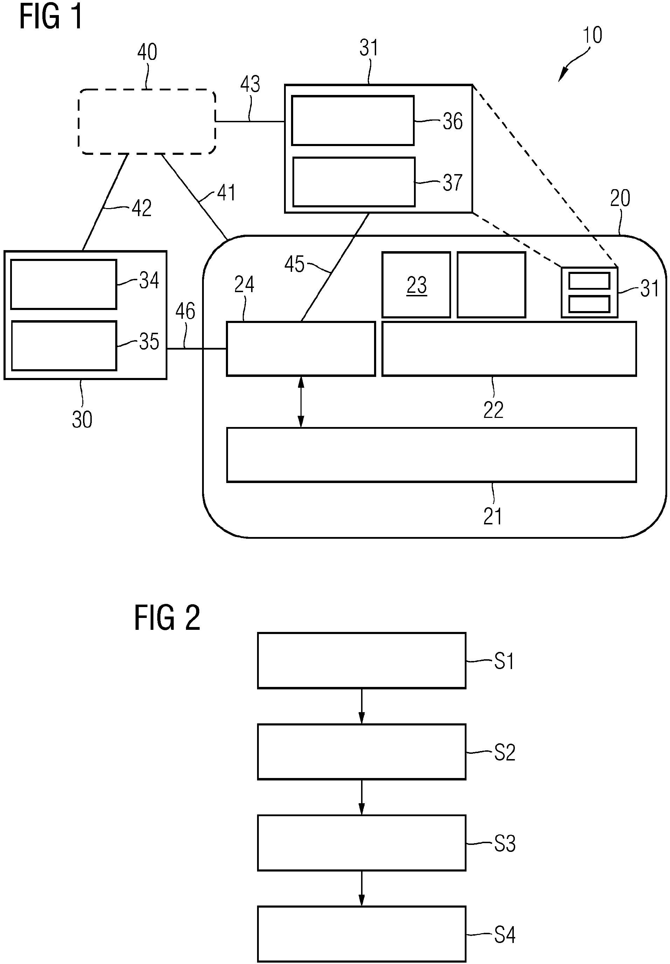

Fig.1 zeigt ein Ausführungsbeispiel eines erfindungsgemäßen Systems 10. Das System 10 umfasst einen Gastrechner 20 mit einem Betriebssystemkern 21, einer Containerlaufzeitumgebung 22 sowie einer Sicherheits-bezogenen Anomalieerkennungskomponente 24, die beide auf den Betriebssystemkern 21 und die darunterliegenden Hardware-Ressourcen (nicht dargestellt) zugreifen. Der Gastrechner kann als ein physisch eigenständige Rechnervorrichtung oder als eine virtuelle Maschine auf einem Server einer geteilt zugänglichen Server-Cloud ausgebildet sein. Auf der Containerlaufzeitumgebung 22 werden mindestens eine Containerinstanz 23 ausgeführt. Die mindestens eine Containerinstanz 23 kann durch eine Orchestrierungseinheit (nicht dargestellt), beispielsweise eine Orchestrierungssoftware, wie beispielsweise Kubernetes, die auf einem von Gastrechner 20 unterschiedlichen Vorrichtung ausgeführt wird, gesteuert und verwaltet werden. Optional umfasst das System 10 eine zentrale Sicherheitsmanagementeinrichtung 40, die abgesetzt von dem Gastrechner 20 angeordnet und über eine Kommunikationsverbindung 41 mit diesem verbunden ist.

Überwachungskomponenten 30, 31 führen Sicherheitsmaßnahmen durch. Die Überwachungskomponenten 30, 31 ist beispielsweise die Orchestrierungseinheit, die Containerinstanzen auf dem Gastrechner verwaltet, oder eine Security Suite oder ein zentrales Schwachstellen-Scanning-System, eine Firewalleinrichtung und ähnliche. Beispiele möglicher Überwachungskomponenten sind eine Orchestrierungs-SW Kubernetes, eine kommerzielle Container Security Suite, wie beispielsweise AquaSec oder auch eine Standard-Firewallkomponente. Weitere Ausführungsbeispiele für die Überwachungskomponente sind ein zentrales Vulnerability Scanning System oder ein sonstiger Schwachstellenscanner, welche nach Abschluss von Scan-Aktivitäten für definierte Containerimages entsprechende Lognachrichten generiert und diese über den Abschluss der Scan-Aktivitäten informieren oder kritische Schwachstellen melden.

Die Überwachungskomponente 30, 31 kann als eine außerhalb des Gastrechners 20 angeordnete Einheit, siehe Überwachungskomponente 30 oder eine innerhalb des Gastrechners 20 angeordnete Einheit, siehe Überwachungskomponente 31 sein. Die interne Überwachungskomponente 31 kann beispielsweise mittels eines Containers auf der Laufzeitumgebung 22 ausgeführt werden. Die interne Überwachungskomponente 31 kommuniziert beispielsweise über interne Prozesskommunikation mit der Anomalieerkennungskomponente 22. Der Kommunikationsablauf zwischen der internen Überwachungskomponente 31 ist ansonsten identisch wie bei einer externen Komponenten 30. Um dies zu verdeutlichen und zur besseren Übersicht ist die interne Überwachungskomponente 31 in Fig.1 zusätzlich außerhalb des Gastrechners 20 dargestellt.

Die außerhalb des Gastrechners 20 angeordnete Überwachungskomponente kann beispielsweise eine Firewalleinrichtung sein. Die Security Suite ist beispielsweise eine Container Security Suite umfassend eine Vereinigung mehrerer Sicherheitsfunktionen, die als Überwachungscontainer implementiert sein und auf dem Gastrechner 20 ausgeführt werden. Auch das zentrales Schwachstellen-Scanning-System kann als Vulnerability-Scanner mittels eines Containers implementiert sein. Die Firewalleinrichtung kann auch als ein Intrusion Detection System ausgebildet und außerhalb des Gastrechners angeordnet sein.

Die Anomalieerkennungskomponente 24 führt mit Hilfe eines zur Verfügung gestellten Containerinstanz-spezifischen Regelwerkes Anomalieerkennung auf System Call Basis durch und überwacht hierfür die Containerinstanzen 23 über einen speziellen Filter, bevorzugt eine extended Berkeley Packet Filter (eBPF) Schnittstelle oder über ein spezielles Kernel Modul durch. Die Überwachungskomponenten 30, 31 umfassen eine Anwendungsschnittstelle 35, 37. Diese ist insbesondere eine einheitliche gemäß einem Gegenständlichen Zustandstranfer Paradigma strukturierte Schnittstelle, die im Weiteren auch als REST-API bezeichnet wird. Über die Anwendungsschnittstelle 35, 37 werden insbesondere Rückmeldungen von der Anomalieerkennungskomponente bei der Überwachungskomponente 30, 31 abgefragt

Die involvierten, Überwachungskomponenten 30, 31, welche die Sicherheitsmaßnahmen implementieren, sind der Anomalieerkennungskomponente 24 bekannt und werden als vertrauenswürdig angenommen. Die mindestens eine Überwachungskomponente ist derart ausgebildet eine Rückmeldung eines Ergebnisses mindestens einer durchgeführten Sicherheitsmaßnahme bzw. der detektierten Sicherheitsschwachstelle an die Anomalieerkennungskomponente 24 zu übermitteln. Jede der Überwachungskomponenten 30, 31 umfasst eine Audit-Schnittstelle 34, 36, die sämtliche für die Anomalieerkennungskomponente 24 erforderlichen Rückmeldungen sendet.

Da nicht nur die Überwachungskomponenten 30, 31 selbst, sondern auch die Kommunikation zwischen den Überwachungskomponenten 30, 31 und der Anomalieerkennungskomponente 24 vertrauenswürdig sein muss, sind die jeweiligen Kommunikationsverbindung 45, 46 bezüglich einer Verletzung der Integrität der übertragenen Information als auch der Authentizität des Senders bzw. Empfängers der Rückmeldung gesichert. Beispielsweise werden die Kommunikationsverbindung 45, 46 mit Hilfe eines Transportschicht-Sicherheitsprotokolls TLS eingerichtet. Gleiches gilt für die Kommunikationsverbindung 41 zwischen der zentrale Sicherheitsmanagementeinrichtung 40 und dem Gastrechner 20 sowie den Kommunikationsverbindungen 42, 43 zwischen der zentrale Sicherheitsmanagementeinrichtung 40 und den Überwachungskomponenten 30, 31.

Anhand von Fig.2 wird ein Ausführungsbeispiel zur Umgebungs-abhängigen sicherheitsbezogenen Anomalieerkennung für eine Containerinstanz, die auf einer Container-Laufzeitumgebung in einem Gastrechner ausgeführt wird, beschrieben. Die Verfahrensschritte werden beispielhaft als durch das System 10 ausgeführt beschrieben.

Der der Erfindung zu Grunde liegende Gedanke besteht darin, dass Containerinstanz-spezifische Überwachungsregeln durch die Anomalieerkennungskomponente 24 dynamisch definiert werden, die in Abhängigkeit von Sicherheitsmaßnahmen die in den Überwachungskomponenten 30, 31 durchgeführt oder in Abhängigkeit von dort detektierten Sicherheitsschwachstellen, abgeleitet werden.

In einem ersten Schritt S1 empfängt die Anomalieerkennungskomponente 24 ein statisches Regelwerk umfassend mindestens eine Anomalieerkennungsregel mit mindestens einer zugeordneten Bedingung. Die Bedingung gibt mindestens eine in der Überwachungskomponente implementierte Sicherheitsmaßnahme oder eine dort detektierte Sicherheitsschwachstelle an.

Hierzu wird initial ein statisches Regelwerk erstellt und der Anomalieerkennungskomponente zur Verfügung gestellt. In dem statischen Regelwerk wird somit nicht nur das auf dem Gastrechner 20 anzuwendende Kriterium wie z.B. eine Überwachung des Netzwerkverkehrs der Containerinstanz 23, die aus einem definierten Containerimage erzeugt wurde, definiert, sondern beinhaltet auch eine Bedingung, die definiert, in welcher Abhängigkeit zu den in der Überwachungskomponente implementierten Sicherheitsmaßnahmen diese Regeln aktiviert werden sollen.

Dabei kann mindestens eine der Bedingungen eine Kombination von Sicherheitsmaßnahmen und/oder Schwachstellen, die durch mehrere unterschiedliche Überwachungskomponenten 30, 31 durchgeführt werden bzw. detektiert wurden, umfassen. Somit kann eine Kombination von Sicherheitsmaßnahmen bzw. die zur Durchführung der Sicherheitsmaßnahmen in den mehreren Überwachungskomponente 30, 31 konfigurierten Sicherheitseinstellungen als Kriterium bzw. Bedingung für die Auswahl der Anomalieerkennungsregeln verwendet werden. Durch die Verknüpfung des statischen Regelwerks mit den Sicherheitseinstellungen der Überwachungskomponenten 30, 31 kann beispielsweise definiert werden, dass ein Netzwerkverkehr einer Containerinstanz ausschließlich mit der Anomalieerkennungskomponente 24 überwacht werden soll, wenn keine die Containerinstanz betreffende Netzwerk-Policy innerhalb einer der Überwachungskomponente definiert wurde.

Beim Start der Containerinstanz auf der Container-Laufzeitumgebung, werden implementierte Sicherheitsmaßnahmen oder detektierten Sicherheitsschwachstellen, die für die Containerinstanz von mindestens einer der Überwachungskomponenten bereitgestellt werden, ermittelt, siehe Verfahrensschritt S2.

Anschließend wird ein dynamisches, Containerinstanz-spezifisches Regelwerk erzeugt, indem diejenigen Anomalieerkennungsregeln des statischen Regelwerks, deren Bedingungen durch die ermittelten Sicherheitsmaßnahmen und/oder ermittelten Sicherheitsschwachstellen erfüllt sind, aktiviert werden, siehe Schritt S3. Die Sicherheitsmaßnahmen werden nun entsprechend dem dynamischen Regelwerk für die Containerinstanz gestartet, siehe Schritt S4.

Das statische Regelwerk und/oder das dynamische Regelwerk wird/werden lokal auf dem Gastrechner oder zentral auf einem abgesetzten Server angeordnet ist und von dort dem Anomalieerkennungskomponente bereitgestellt wird. Das statische oder auch das dynamische Regelwerk können von einem entfernten Repository, beispielsweise einem Code-Repository oder einem Webserver zur Verfügung gestellt werden.

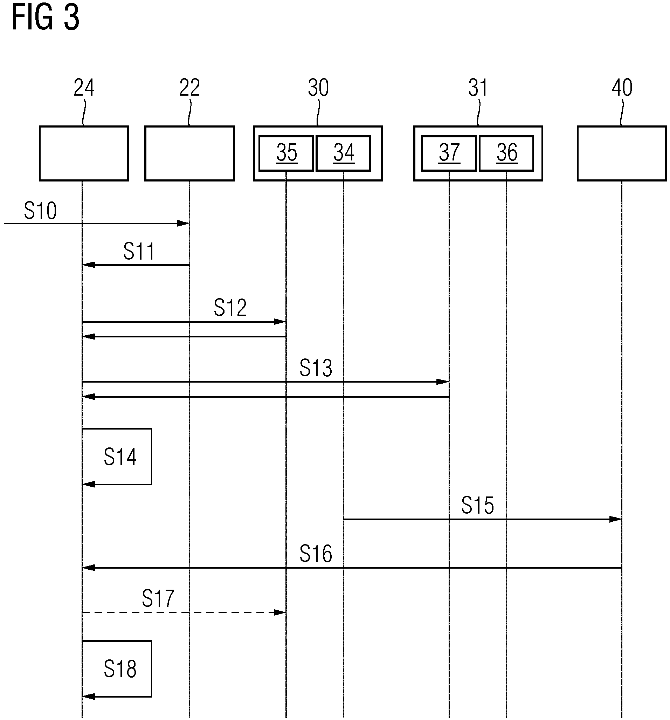

Anhand von Fig.3 werden die Verfahrensschritte zur Einrichtung und zur Aktualisierung des dynamischen, Containerinstanz-spezifischen Regelwerks anhand eines Kommunikationsablaufes beschrieben, die zwischen den beteiligten Einheiten beim Start einer Containerinstanz und bei einer nach dem Start der Containerinstanz in einer Überwachungskomponente durchgeführten Konfigurationsänderung stattfindet.

Die an der Kommunikation beteiligten Einheiten sind, angelehnt an das in Fig.1 beschriebene System, die Anomalieerkennungskomponente 24, die Container-Laufzeitumgebung 22, die beiden Überwachungskomponenten 30, 31, jeweils umfassend eine Auditeinheit 34, 36 und eine Anwendungsschnittstelle 35, 37, sowie die zentrale Sicherheitsmanagementeinrichtung 40. Für den weiteren Ablauf wird angenommen, dass die Anomalieerkennungseinheit 24 bereits ein statisches Regelwerk mit Anolmalieerkennungsregeln und darin enthaltenen Bedingungen empfangen hat bzw. auf dieses zugreifen kann.

Wird auf der Container-Laufzeitumgebung 22 des Gastrechners 20 eine Mitteilung zum Starten einer Containerinstanz empfangen, siehe S10, so wird dies dort erkannt und ein entsprechendes Ereignis, auch Event bezeichnet, an die Amalieerkennungskomponente 24 gemeldet, siehe S11. Ein entsprechender Event wird bei jedem Start einer Instanz übermittelt. Die Anomalieerkennungskomponente 24 ermittelt daraufhin mindestens einen eindeutigen Parameter der Containerinstanz, beispielsweise einen Containerinstanznamen durch Abfrage der Container-Laufzeitumgebung 22 und/oder der Orchestrierungseinheit.

Anschließend verwendet die Anomalieerkennungskomponente 24 den mindestens einen ermittelten Parameter in einer Anfrage, siehe S12, S13 an die erste Überwachungskomponente 30 bzw. die zweite Überwachungskomponente 31, um Sicherheitsmaßnahmen, die für Containerinstanz von der Überwachungskomponente 30, 31 bereitgestellt werden, abzurufen. Die mindestens eine Überwachungskomponente 30, 31 übermittelt in einer Rückmeldung ein Ergebnis der mindestens einen durchgeführten Sicherheitsmaßnahme bzw. der detektierten Sicherheitsschwachstelle an die Anomalieerkennungskomponente 24.

Eine solche Abfrage enthaltend den mindestens einen eindeutigen Parameter, wird an die Anwendungsschnittstelle 35, 37 jeder der Überwachungseinheiten 30, 31 gesendet. Als Rückmeldung auf die Anfrage S12 sendet die Überwachungseinheit 30, die beispielsweise als Orchestrierungseinheit ausgebildet ist, eine für die Instanz durchgeführte Netzwerk-Policy zurück an die Anomalieerkennungskomponente 24. Die zweite Überwachungskomponente 31, die als Security Suite ausgebildet ist, übermittelt als Rückmeldung auf die Anfrage S13 beispielsweise die zur Überwachung der betreffenden Containerinstanz konfigurierten Sicherheitseinstellungen der Überwachungskomponente 31. Somit werden beispielsweise für die Containerinstanz bereitgestellte Netzwerkbeschränkungen oder auch eine für die Containerinstanz ermittelte Sicherheitsschwachstelle an die Anomalieerkennungskomponente 24 übermittelt.

In einem Ausführungsbeispiel abonniert die Anomalieerkennungskomponente 24 bei der Überwachungskomponente 30, 31 bestimmte Nachrichten bzw. Nachrichtenart und kann somit den Umfang der Rückmeldungen der Überwachungskomponente 30, 31 gezielt einschränken. Aus einer Vielzahl von möglichen Rückmeldungen für jede Überwachungskomponente 30,31 wird eine Untermenge von Rückmeldungen ausgewählt und lediglich die ausgewählten Rückmeldungen werden von der Überwachungskomponente 30, 31 and die Anomalieerkennungskomponente 24 bereitgestellt. In einem Anwendungsszenario sendet die Überwachungskomponenete 30, 31 Rückmeldungen ausschließlich über Netzwerk-Policies, die in einem definierten Namespace konfiguriert sind. In einem Anwendungsszenario sendet die Überprüfungskomponente 30, 31 eine Rückmeldung über ein Ergebnis eines Schwachstellenscans ausschließlich für Containerinstanzen, die aus bestimmten Containerimages erzeugt wurden.

Die Rückmeldungen der Überwachungskomponenten 30, 31 können entweder direkt an die Anomalieerkennungskomponente 24 übermittelt werden, siehe S12, S13 oder an eine zentrale Sicherheitsmanagementeinrichtung 40 übermittelt werden, innerhalb der zentrale Sicherheitsmanagementeinrichtung 40 verarbeitet, und gegebenenfalls mit mindestens einer Rückmeldung einer anderer Überwachungskomponente 30, 31 korreliert werden. Die zentrale Sicherheitsmanagementeinrichtung 40 übermittelt dann eine entsprechende Rückmeldung an die Anomalieerkennungskomponente 24.

Die Anomalieerkennungskomponente 24 überprüft die Bedingungen der einzelnen Anomalieerkennungsregeln im statischen Regelwerk gegenüber den zurückgemeldeten Sicherheitsmaßnahmen und Sicherheitsschwachstellen und aktiviert diejenigen Regeln, bei denen die Sicherheitsmaßnahmen und/oder Sicherheitsschwachstellen mit den Bedingungen übereinstimmen, siehe S14.

Führt eine der Überwachungskomponenten zur Laufzeit der Containerinstanz eine Konfigurationsänderung durch, beispielsweise werden die Einstellungen einer Firewalleinrichtung geändert oder eine Anpassung einer Netzwerk-Policy in einer Security Suite durchgeführt oder ein neuer Suchlauf in einem Schwachstellen-Scanners durchgeführt, übermittelt entweder die Anomalieerkennungskomponente 30, insbesondere deren Auditeinheit 34, die resultierenden Sicherheitsmaßnahmen, Sicherheitseinstellungen oder detektierten Sicherheitsschwachstellen direkt oder über die zentrale Sicherheitsmanagementeinrichtung 40 an die Anomalieerkennungskomponente 40. Beispielsweise sendet die Auditeinheit 34 der Überwachungseinheit 30 eine Rückmeldung S15 an die Sicherheitsmanagementeinrichtung 40. Die Sicherheitsmanagementeinrichtung 40 korreliert die Rückmeldung S15 gegebenenfalls mit weiteren Informationen und leitet die korrelierte Rückmeldung S16 die Anomalieerkennungskomponente 24.

Die Anomalieerkennungskomponente 24 erkennt hierdurch, dass sich die äußeren Sicherheitskriterien geändert haben und ermittelt erneut das dynamisch angepasste Regelwerk. Sofern die Rückmeldungen der Überwachungskomponenten 30, 31 nicht ausreichend Information enthalten, kann die Anomalieerkennungskomponente 24 über die Anwendungsschnittstelle 35, 37 weitere Abfragen senden und weitergehende Informationen ermitteln.

Wird die Ausführung der Containerinstanz auf der Container-Laufzeitumgebung 22 gestoppt, wird dies der Anomalieerkennungskomponente 24 mittels einer entsprechenden Ereignisnachricht zur Verfügung gestellt. Die Anomalieerkennungskomponente 24 führt aufgrund der Ereignisnachricht eine Bereinigung des dynamischen Regelwerks durch. Beispielsweise wird das Containerinstanz-spezifische Regelwerk zurückgesetzt auf das statische Regelwerk, oder das Containerinstanz-spezifische Regelwerk wird gelöscht. Dadurch wir sichergestellt, dass auf dem Gastrechner stets ein neues Containerinstanz-spezifisches Regelwerk für die darauf betriebenen Containerinstanzen generiert wird.

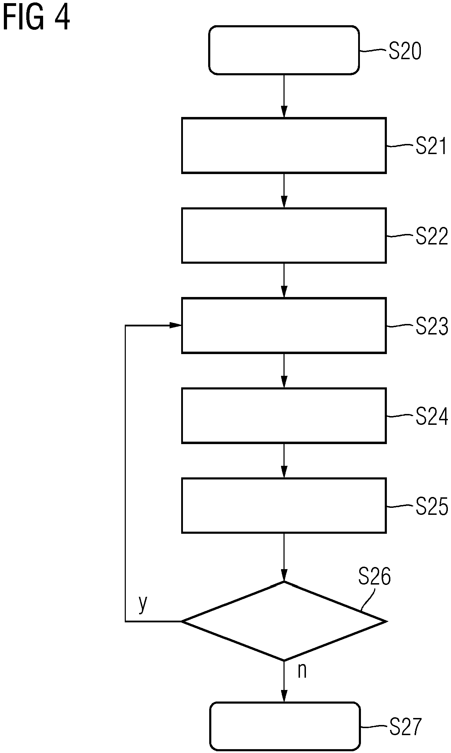

Auf Fig.4 ist ein interner Ablauf innerhalb der Anomalieerkennungskomponente bei einer Aktualisierung des Containerspezifischen Regelwerks dargestellt.

Im Ausgangszustand S20 liegt ein Anomalieerkennungskomponente vor. In Schritt S21 wird ein statisches Regelwerk empfangen und abgespeichert. In Schritt S22 sendet die Anomalieerkennungskomponente Abfragen bezüglich Sicherheitsmaßnahmen und/oder Sicherheitsschwachstellen an die Überwachungskomponenten. Die für die Abfrage bzw. die Containerinstanz relevanten Überwachungsmaßnahmen sind in einem Ausführungsbeispiel der Anomalieerkennungskomponente bekannt. In Schritt 23 wird aus dem statischen Regelwerk und der Information aus den Rückmeldungen ein Container-spezifisches Regelwerk für die Containerinstanz erstellt und angewandt.

Während der Laufzeit empfängt die Anomalieerkennungskomponente weitere Rückmeldungen von den Überwachungskomponenten und/oder der zentralen Sicherheitsmanagementeinrichtung, siehe S24. Bei Bedarf werden weitere Parameter über die Anwendungsschnittstelle der Überwachungskomponente abgefragt, siehe S25. In Schritt S26 wird in der Anomalieerkennungskomponente überprüft, ob das dynamische Regelwerk basierend auf den weiteren Parametern angepasst werden muss. Ist dies der Fall, siehe Pfeil y wird das Regelwerk entsprechend Schritt 26 aktualisiert und die Schritte S24, S25, S26 durchgeführt, bis alle Information für die Erstellung einer aktualisierten Containerinstanz-spezifischen Regelwerks vorliegt. Ergibt sich aus der Überprüfung in Schritt S26, dass keine weitere Anpassung des dynamischen Regelwerks notwendig ist, wird der vorliegende Fassung abgespeichert und für die betrachtete Containerinstanz angewandt.

Durch das beschriebene Verfahren können Anomalieerkennungs- bzw. Integritätsüberwachungsregeln für Containerinstanzen knotenspezifisch, d.h. für den Gastrechner-spezifisch minimiert werden. Anomalieerkennungs- bzw. Integritätsüberwachungsregeln können in Abhängigkeit von Einstellungen von außerhalb der Instanz betriebenen Sicherheitskomponenten betrieben werden. Die Lösung kann auch Scan-Ergebnisse, z.B. von Penetrationstools oder Schwachstellen Scannern, in die Erzeugung entsprechender Regeln einbinden. Das Container-spezifische Regelwerk wird über den Lebenszyklus einer Containerinstanz dynamisch angepasst und Gastrechner-spezifisch generiert.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Umgebungs-abhängigen sicherheitsbezogenen Anomalieerkennung für eine Containerinstanz (23), die auf einer Container-Laufzeitumgebung (22) in einem Gastrechner (20) ausgeführt wird, umfassend die Schritte:
ausgeführt von einer Anomalieerkennungskomponente (24) im Gastrechner (20),
- Empfangen (S1) eines statischen Regelwerks umfassend mindestens eine Anomalieerkennungsregel mit mindestens einer zugeordneten Bedingung, wobei die Bedingung mindestens eine in einer Überwachungskomponente (30, 31) implementierte Sicherheitsmaßnahme oder eine dort detektierte Sicherheitsschwachstelle angibt,
- beim Start der Containerinstanz (23) auf der Container-Laufzeitumgebung (22), Ermitteln (S2) von implementierten Sicherheitsmaßnahmen oder detektierten Sicherheitsschwachstellen, die für die Containerinstanz (23) von mindestens einer der Überwachungskomponenten (30, 31) bereitgestellt werden,
- Erzeugen (S3) eines dynamischen, Containerinstanz-spezifischen Regelwerks, indem diejenigen Anomalieerkennungsregeln des statischen Regelwerks, deren Bedingungen durch die ermittelten Sicherheitsmaßnahmen und/oder ermittelten Sicherheitsschwachstellen erfüllt sind, aktiviert werden, und
- Starten (S4) der Sicherheitsmaßnahmen entsprechend dem dynamischen Regelwerk für die Containerinstanz (23).

2. Verfahren nach Anspruch 1, wobei die Sicherheitsmaßnahmen, die für die Containerinstanz (23) durch mindestens eine Überwachungskomponente (30, 31) bereitgestellt werden, anhand mindestens eines eindeutigen Parameters der Containerinstanz (23), insbesondere einem Containerinstanznamen, mittels einer Anfrage bei der Container-Laufzeitumgebung (22) und/oder einer Orchestrierungsschnittstelle durch die Anomalieerkennungskomponente (24) ermittelt werden.

3. Verfahren nach einem der vorangehenden Ansprüche, wobei mindestens eine der Bedingungen eine Kombination von Sicherheitsmaßnahmen und/oder Schwachstellen, die durch mehrere unterschiedliche Überwachungskomponenten (30, 31) durchgeführt werden bzw. detektiert sind, umfasst.

4. Verfahren nach einem der vorangehenden Ansprüche, wobei die mindestens eine Überwachungskomponente (30, 31) eine Rückmeldung umfassend ein Ergebnis der mindestens einen durchgeführten Sicherheitsmaßnahme bzw. der detektierten Sicherheitsschwachstelle an die Anomalieerkennungskomponente (24) übermittelt.

5. Verfahren nach Anspruch 4, wobei eine zentrale Sicherheitsmanagementeinrichtung (40) die mindestens eine Rückmeldung von der mindestens einen Überwachungskomponente (30, 31) empfängt, die mindestens eine Rückmeldung der mindestens einen Überwachungskomponente (30, 31) korreliert und mindestens eine korrelierte Rückmeldung an die Anomalieerkennungskomponente (24) übermittelt.

6. Verfahren nach einem der Ansprüche 4-5, wobei eine Kommunikationsverbindung (41,...,46), über die Rückmeldungen übermittelt werden, integritäts- und authentitzitätsgesichert, insbesondere durch eine TLS Protokoll, eingerichtet wird.

7. Verfahren nach Anspruch 5-6, wobei aus einer Vielzahl von möglichen Rückmeldungen für jede Überwachungskomponente (30, 31) eine Untermenge von Rückmeldungen ausgewählt werden und lediglich die ausgewählten Rückmeldungen von der Überwachungskomponente (30, 31) an die Anomalieerkennungskomponente (24) bereitgestellt werden.

8. Verfahren nach einem der vorangehenden Ansprüche, wobei eine Konfigurationsänderung, die während der Laufzeit der Containerinstanz (23) in einer der Überwachungskomponenten (30, 31) durchgeführt wird, an die Anomalieerkennungskomponente (24) gemeldet wird, und/oder
wobei das dynamische Containerinstanz-spezifische Regelwerk in der Anomaliererkennungskomponente (24) an die geänderte Konfiguration der Überwachungskomponente (30, 31) angepasst wird.

9. Verfahren nach einem der Ansprüche 4-8, wobei zusätzliche Rückmeldungen von der Anomalieerkennungskomponente (24) über eine Anwendungsschnittstelle, insbesondere eine REST-API, bei der Überwachungskomponente (30, 31) abgefragt werden.

10. Verfahren nach einem der vorangehenden Ansprüche, wobei beim Beenden der Containerinstanz (23) eine Ereignismeldung an die Anomalieerkennungskomponente (24) übermittelt wird und das dynamische, Containerinstanz-spezifische Regelwerk auf der Anomalieerkennungskomponente (24) gelöscht wird.

11. Verfahren nach einem der vorangehenden Ansprüche, wobei eine der Überwachungskomponenten (30, 31) eine der folgenden Komponenten ist:
- eine Orchestrierungseinheit, die Containerinstanzen auf dem Gastrechner verwaltet,
- eine Security Suite,
- ein zentrales Schwachstellen-Scanning-System
- eine Firewalleinrichtung.

12. Verfahren nach einem der vorangehenden Ansprüche, wobei das statische Regelwerk und/oder das dynamische Regelwerk lokal auf dem Gastrechner (20) oder zentral auf einem abgesetzten Server angeordnet ist und von dort der Anomalieerkennungskomponente (24) bereitgestellt wird.

13. System zur Umgebungs-abhängigen sicherheitsbezogenen Anomalieerkennung für eine Containerinstanz (23), die auf einer Container-Laufzeitumgebung (22) in einem Gastrechner (20) ausgeführt wird, umfassend eine Anomalieerkennungskomponente (24) im Gastrechner (20), die derart ausgebildet ist,
- ein statisches Regelwerk umfassend mindestens eine Anomalieerkennungsregel mit mindestens einer zugeordneten Bedingung zu empfangen, wobei die Bedingung mindestens eine in einer Überwachungskomponente (30, 31) implementierte Sicherheitsmaßnahme oder eine dort detektierte Sicherheitsschwachstelle angibt,
- beim Start der Containerinstanz (23) auf der Container-Laufzeitumgebung (22), implementierte Sicherheitsmaßnahmen oder detektierte Sicherheitsschwachstellen, die für die Containerinstanz (23) von mindestens eine der Überwachungskomponenten (30, 31) bereitgestellt werden, zu ermitteln,
- ein dynamisches, Containerinstanz-spezifisches Regelwerk zu erzeugen, indem diejenigen Anomalieerkennungsregeln des statischen Regelwerks, deren Bedingungen durch die ermittelten Sicherheitsmaßnahmen und/oder ermittelten Sicherheitsschwachstellen erfüllt sind, aktiviert werden, und
- die Sicherheitsmaßnahmen entsprechend dem dynamischen Regelwerk für die Containerinstanz (23) zu starten.

14. System nach Anspruch 13, umfassend eine zentrale Sicherheitsmanagementeinrichtung (40), die abgesetzt angeordnet von dem Gastrechner (20) ist und über eine Kommunikationsverbindung (41) mit dem Gastrechner (20) verbunden ist.

15. Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens nach einem der Ansprüche 1 bis 12 durchzuführen.
